# EUROPÄISCHE PATENTANMELDUNG

(11) **EP 2 306 374 A1**
(43) Veröffentlichungstag der Anmeldung: **06.04.2011**
(21) Anmeldenummer: 09172250.4
(22) Anmeldetag: 05.10.2009
(51) Int. Cl.: G06N 5/02

(54) **Verbessertes Profilmanagementsystem**

(71) Anmelder: Deutsche Telekom AG, 53113 Bonn (DE)
(72) Erfinder: Plumbaum, Till, 14197, Berlin (DE); Schulz, Katja, 13503, Berlin (DE); Stelter, Tino, 10557, Berlin (DE)
(74) Vertreter: 2K Patentanwälte Blasberg Kewitz & Reichel

(57) **Zusammenfassung**

Ein Profil-Abbildungssystem, das mindestens zwei disjunkte Profile miteinander verknüpft, die zur Parametrisierung einer Computer gesteuerten Anwendungen als digitale Daten auf Speichern hinterlegt sind, wobei die Profile Attributbezeichnungen und Attributwerte aufweisen, unter Verwendung:
- eines weiteren Speichers auf dem eine Datenstruktur abgelegt ist, und die eine Meta-Ontologie bereitstellt;
- einem Zugriffsmodul, das den Zugriff auf die disjunkten Profile auf den Speichern ermöglicht
- einer Bearbeitungseinheit, die die zwei disjunkten Profile auf die Meta-Ontologie abbildet, indem die Attributbezeichnungen und die Attributwerte mit der Meta-Ontologie verknüpft werden;
- ein Bereitstellungsmodul, das einen Zugriff auf die Meta-Ontologie über ein Netzwerk ermöglicht, um der Anwendung die Attributwerte für vorgegebene Attributbezeichnungen bereitzustellen, damit eine Anwendung parametrisierbar ist.

## Beschreibung

Bei der Erfindung handelt es sich um ein Verfahren und ein System zur Verwaltung und Angleichung einer Vielzahl von Profilen, die einem Anwender auf einem Rechnersystem für die Nutzung unterschiedlicher Ressourcen und Anwendungen zur zugeordnet sind, um die Anwendung oder Ressource zu personalisieren.

### Gebiet der Erfindung:

Heutzutage ist die Profile- und Benutzerverwaltung Bestandteil jedes benutzerzentrierten Dienstes. Dabei verwaltet aber jeder Dienst sein eigenes Profil, in einem eigenen Format, mit Informationen die nur dem einen Dienst zur Verfügung stehen. Dieses Prinzip der Datensilos, also Benutzerinformationen eines Dienstes die nur dem Dienst zur Verfügung stehen, befindet sich im Augenblick im Wandel. Immer mehr Dienste öffnen sich und geben Benutzerinformationen frei. Dieser Trend lässt sich in zwei Richtungen aufteilen.

Mehr-Profile Benutzerverwaltung sind Dienste, die Benutzerdaten von mehreren Anwendungen speichern und verwalten. Hierbei wird das Schema des Profils von der zentralen Datenstelle weitestgehend vorgegeben. Aktuelle Beispiele sind:
- http://en.wikipedia.org/wiki/Windows_Live_ID
- http://openid.net/ + http://openid.net/specs/openid-attribute-exchange-1_0-04.html

Es gibt bereits eine Reihe von offenen Benutzerschnittstellen und Standards.

Es werden offene Standards für die Speicherung und Weitergabe, z. B. Ontologien wie FOAF, definiert, die das Austauschen von Informationen zwischen den Diensten ermöglichen.

Aktuelle Beispiele sind:
- http://dataportability.org/
- http://code.google.com/intl/de-DE/apis/opensocial/
- http://en.wikipedia.org/wiki/Liberty_Alliance

Weitere Bereiche, die in die Benutzerprofil Verwaltung eingreifen sind Personalisierung, Künstliche Intelligenz, Ontologie, Ontologie Mapping. Details hierzu sind der Literaturliste zu entnehmen.

Der Nachteil der aktuellen Verfahren ist, dass die Anwendungen, deren Profile von einer gemeinsamen Profilverwaltung verwaltet werden sollen oder die Daten untereinander austauschen wollen, sich entweder an das vorgegebene Format der Benutzerverwaltung anpassen müssen oder aber sie müssen offene Standards adaptieren um die Informationen anderer Applikationen zu verstehen.

Wenn sie sich an das Format einer gemeinsamen Profilverwaltung anpassen, ist es unmöglich oder nur mit viel Aufwand möglich, benötigte Daten, die nicht im generellen Profil vorgesehen sind, zu speichern.

Der Austausch von Informationen mittels offener Standards birgt dieses Risiko nicht. Die Applikation verwaltet ihre Benutzerdaten im gewünschten Format und Umfang und gibt diese Informationen mittels eines offenen Standards weiter. Der Nachteil ist, dass eine Applikation, die die Daten einer Anderen lesen möchte, deren Format erst mal verstehen muss. D. h. sie muss für jeden Standard eine eigene Komponente haben, die das Verstehen des offenen Standards ermöglicht.

### Überblick über die Erfindung

Aufgabe der Erfindung ist die Auswertung und Verschmelzung von Benutzerprofilen, so dass ein Benutzer nicht alle Informationen erneut für jedes Profil bestimmen muss, sondern Informationen, die bereits für andere Profile eingegeben wurden, nutzen kann.

Gelöst wird diese Aufgabe durch eine Vorrichtung und ein Verfahren nach den vorgehenden Ansprüchen.

Im Einzelnen handelt es sich um ein System oder ein Verfahren zur Verwaltung von Profilen eines Benutzers zur automatischen oder halb-automatischen Verknüpfung von verschiedenen Anwendungsprofilen eines Benutzers, die zu einer Gesamtrepräsentation des Benutzers erweitert werden können. Dabei werden die einzelnen Profile des Benutzers die er bei verschiedenen Diensten hinterlegt hat und in denen anwendungsspezifische Informationen gespeichert sind, mittels einer Meta-Ontologie transparent verknüpft und stehen somit anwendungsübergreifend zur Verfügung. So werden z. B. die Informationen eines Filmdienstes und eines Musikdienstes verknüpft und bilden ein aggregiertes Benutzerprofil das Informationen aus beiden Diensten enthält und eine verbesserte Personalisierung ermöglicht. Es können einzelne Attribute der Profile miteinander verknüpft werden, beispielsweise die Musikinteressen aus verschiedenen Diensten, und mit einem Ähnlichkeitswert belegt werden.

In einer möglichen Ausführungsform handelt es sich um ein Profil-Abbilungssystem, das mindestens zwei disjunkte Profile miteinander verknüpft, die zur Parametrisierung einer Computer gesteuerten Anwendungen als digitale Daten auf Speichern hinterlegt sind. Hierbei können die Profile jeweils heruntergeladen werden und separat gespeichert werden bevor sie analysiert werden, oder es erfolgt ein Online-Zugriff. Bei letzterem werden dem System die Zugriffsdaten der Benutzer für die Anwendungen bereitgestellt. In der Regel handelt es sich um Anwendungen oder Dienste, die im Internet oder Intranet arbeiten.

Die Profile weisen Attributbezeichnungen und Attributwerte auf, die vorzugsweise noch strukturiert sind und in XML abgelegt sind. Auf dem System wird unter Verwendung eines weiteren Speichers auf dem eine Datenstruktur abgelegt ist, eine Meta-Ontologie bereitstellt. Diese ist oftmals als ein hierarchischer Baum aufgebaut.

Um einen Zugriff auf die Profile zu ermöglichen wird, ein Zugriffsmodul eingesetzt (in der Regel Programmcode, der auf einem Rechner abläuft), das den Zugriff auf die disjunkten Profile auf den Speichern ermöglicht. Wie bereits erwähnt, kann dies z. B. durch die Eingabe bzw. Hinterlegung von Passwörtern erfolgen, oder durch Single-sign-on-Techniken, die wohl bekannt sind.

Eine Bearbeitungseinheit, die vorzugweise ein Computer bzw. ein Prozessor ist, der entsprechend programmiert ist, bildet die zwei disjunkten Profile auf die Meta-Ontologie ab, indem die Attributbezeichnungen und die Attributwerte mit der Meta-Ontologie verknüpft werden. Diese Verknüpfung erfolgt durch Objekt-Referenzen, die z.B. in einer Datenbank abgelegt werden. Auch kann die Meta-Ontologie für jeden Benutzer separat verknüpft werden. Die so erzeugte und verknüpft Meta-Ontologie wird einem Bereitstellungsmodul zur Verfügung gestellt, das einen Zugriff auf die Meta-Ontologie über ein Netzwerk durch Anwendungen ermöglicht, um Anwendung die Attributwerte für vorgegebenen Attributbezeichnungen bereitzustellen, damit eine Anwendung parametrisierbar ist. Hierbei nutzen die Anwendungen vorzugweise als Einstiegspunkt den Aufbau der Meta-Ontologie, wenn ihnen diese bekannt ist, oder wurde im Vorfeld selber in die Ontologie eingefügt. Im letzten Fall können sie sich über die eigenen Parameter auf die weiteren Informationen der Profile zugreifen.

In der bevorzugten Ausführungsform verknüpft die Bearbeitungseinheit die Profile auf der Basis von einem oder mehreren der folgenden Ansätze. Sollten mehrere Ergebnisse erzeugt werden, so können diese miteinander verknüpft werden, um ein Gesamtbild zu erzeugen.

In einem ersten Schritt erfolgt eine Bestimmung der Ähnlichkeit der Attributbezeichnungen und Attributwerte. Hierbei werden bekannte Verfahren für die Syntax- und Semantik-Ähnlichkeit eingesetzt.

Bei der Bestimmung der Ähnlichkeit der Konzept-Bezeichnung und deren Attribute, wird die nächste Stufe der strukturierten Daten beschrieben. Eine Struktur besteht in der Regel aus einer weiteren Struktur oder einer oder mehrerern Attributbezeichnungen und Attributwerten. Ferner ist eine Struktur durch einen Namen gekennzeichnet. Details zur Analyse der Struktur finden sich weiter unten. In der bevorzugten Ausführungsform werden neben der Ähnlichkeit der Attribute, deren Anzahl und Anordnung berücksichtigt, sowie der Name der Struktur.

Als letzter Punkt erfolgt eine Bestimmung der Ähnlichkeit der Struktur der Profile. Hierbei werden die Hierarchien berücksichtigt.

Um die Ähnlichkeiten zu bestimmen, setzt die Bearbeitungseinheit ein Ensemble von Agenten ein, das sowohl verschiedene Verfahren der künstlichen Intelligenz verwendet und/oder kombiniert, um die Ähnlichkeiten der Attribute zu berechnen,
und/oder Verfahren wie Pearson Korrelation und Jaccard Index um die Inhalte der Attribute auf Ähnlichkeit zu untersuchen. Diese Funktionen können als Services eingebunden werden, oder auch als Objekte oder Funktionen auf dem Rechner eingebunden werden. In der bevorzugten Ausführungsform sind die Verfahren der künstlichen Intelligenz, Verfahren des maschinellen Lernens wie Naive Bayes, Support Vector Machines und Entscheidungsbäume. Die Bestimmung der Ähnlichkeit der Konzept-Bezeichnung erfolgt z. B. durch Berechnung der Ähnlichkeit der Attributbezeichnungen wobei zusätzliches externes Wissen wie WordNet oder anderer linguistischer Datenbanken verwendet wird.

Diese werden entsprechend spezifisch auf für den Einsatz angepasst und auf die Meta-Ontologie eingestellt.

In der bevorzugten Ausführungsform werden die KI-Verfahren während der Laufzeit hinzugefügt oder entfernt, durch Veränderung von Konfigurationsparametern oder des Prozessablaufs. Dies kann insbesondere durch Dienste und einer flexiblen Prozesskonfiguration erreicht werden.

Die Verknüpfung mit der Meta-Ontologie erfolgt auf der Basis der Beziehung PartOf, und/oder einer Beziehung die die Ähnlichkeit ausdrückt, similarTo, der mit einem Prozentwert der Ähnlichkeit versehen ist, und diesen auf dem Speichersystem ablegt.

In einer bevorzugten Ausführungsform werden die Ergebnisse der verschiedenen Berechnungsschritte aggregiert und es wird eine Empfehlung ausgesprochen, die entweder automatisch verwendet wird oder halb-automatisch von einem Benutzer im letzten Schritt noch bestätigt werden kann, um das Agenten-Ensemble weiter zu trainieren und zu verbessern. Hierbei werden Benutzerdialoge ausgegeben, bei denen der Benutzer die Möglichkeit hat einzugreifen.

Die automatische oder halb-automatische Verknüpfung von Benutzerprofilen mittels einer Meta-Ontologie erlaubt es Anwendungen zum einen, ein eigenes Datenmodell für ihre Profildaten zu verwenden, aber auch diese Daten mittels einer zentralen Profilverwaltung mit anderen Applikationen zu teilen. Somit werden die oben genannten Nachteile kompensiert und die Vorteile der genannten Ansätze kombiniert.

Dazu wird eine Profil-Mapping Komponente benötigt, die eine transparente Aggregation der Profile eines Nutzens aus verschiedenen Applikationen ermöglicht sowie den Zugriff auf Daten aus anderen Applikationen, ohne die explizite Anforderung deren Austauschformat zu kennen und zu verstehen.

### Figurenbeschreibung:

Es erfolgt die Beschreibung mit Bezugnahme auf die Figuren, die im Folgenden kurz beschrieben werden
Fig. 1 zeigt die Verknüpfung von zwei Profildaten durch eine Meta-Ontologie
Fig. 2 zeigt die Verfahrensschritte zur Zusammenführung der Profildaten
Fig. 3 zeigt ein Wordnet Beispiel, das eingesetzt wird zur Bestimmung von ähnlichen Begriffen.

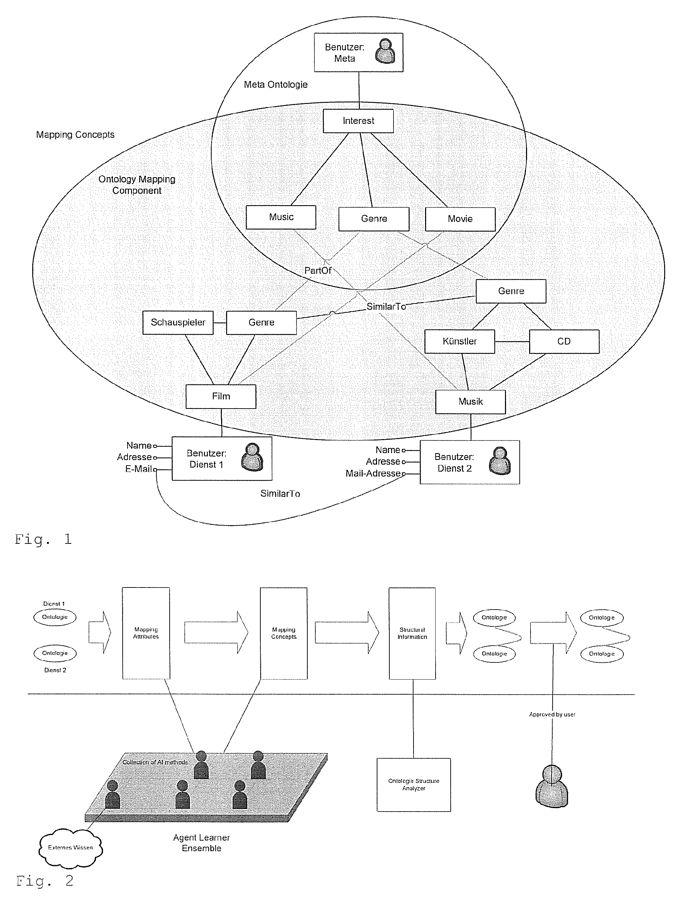

Das Profil-Mapping System hat folgende, in Fig. 1 visualisierte, Wirkungsweise. Zwei Beispielanwendungen, Dienst 1 und Dienst 2, wollen Benutzerinformationen untereinander austauschen. Dazu schließen sie sich an die Profil-Mapping Komponente an, die Teil einer Gesamt-Benutzerprofilverwaltung, sein kann. Das Profil-Mapping System untersucht nun die Profile der beiden Dienste, vergleicht sie miteinander und mit der von Profil-Mapping verwalteten Meta-Ontologie. Das genaue technische Vorgehen wird in Fig. 2 detailliert erläutert.

Das Profil-Mapping System versucht dabei Ähnlichkeiten (technischer Ansatz wird weiter unten diskutiert) zwischen den Profilen festzustellen und diese dann zu verknüpfen. So werden im Beispiel in Fig. 11 die Daten der Dienste mit der Meta-Ontologie verknüpft. Zur Verknüpfung gibt es die Beziehung PartOf, sowie eine Beziehung der Ähnlichkeit, similarTo, mit einem Prozentwert der Ähnlichkeit. Im Beispiel in Abbildung 2 werden z. B. Beziehungen der Felder Genre in den Profilen der Dienste 1 und 2 festgestellt. Durch diese Verknüpfung mit der Meta-Ontologie kann nun Dienst 1 nach den Interessen des Benutzers aus Dienst 2 fragen, ohne das Profilformat von Dienst 2 zu kennen. Außerdem erhält er einen Ähnlichkeitswert zu bestimmten Information, die dem Dienst 1 als Einschätzung bezüglich der Qualität und der thematischen Übereinstimmung der Daten aus Dienst 2 geben. So sind die Genre-Informationen aus dem Musik-Kontext von Dienst 2 von Interesse für Dienst 1, lassen sich aber nicht eins zu eins übertragen.

Im Folgenden wird der technische Ablauf des Profil-Mappings erläutert, wie er in Fig. 2 dargestellt ist.

Die beiden Profile der Dienste 1 und 2, in Abbildung 2 mit Ontologie bezeichnet, werden im ersten Schritt auf Ähnlichkeiten der Attribute untersucht.

### Beispiel Ontologie Dienst 1:

```
 <rdf:RDF xmlns:rdf="http://www.w3.org/1999/02/22-rdf-syntax-
 ns#"
        xmlns:foaf=3http://xmlns.com/foaf/0.1/">
 <foaf:Person>
   <foaf:name>Peter Parker</foaf:name>
   <foaf:mbox
 rdf:resource="mailto:peter.parker@dailybugle.com"/>
   <dai:genre>Rock</dai:genre>
```

```
 </foaf:Person>
 </rdf:RDF>
```

### Beispiel Ontologie Dienst 2:

```
 <rdf:RDF xmlns:rdf="http://www.w3.org/1999/02/22-rdf-syntax-
 ns#"
        xmlns:ml="http://website.site/ml">
 <ml:Customer>
  <ml:customer_name>Peter Parker</<ml:customer_name>
  <ml:mail
 rdf:resource="mailto:peter.parker@dailybugle.com"/>
 </ml:Customer>
 </rdf:RDF>
```

Bei der Berechnung der Ähnlichkeit der Attribute werden sowohl die Attribute- Bezeichnungen, also z.B. <ml:customer_name> und <foaf:name>, als auch die Attributwerte, in beiden Fällen Peter Parker als Eingabewerte für die Berechnung der Ähnlichkeit verwendet. Dazu wird hier, im Gegensatz zu anderen Ansätzen, ein Ensemble von Agenten eingesetzt, das sowohl verschiedene Verfahren der künstlichen Intelligenz verwendet und kombiniert, um die Ähnlichkeiten der Attribute zu berechnen, als auch Verfahren wie Pearson Korrelation und Jaccard Index um die Inhalte der Attribute auf Ähnlichkeit zu untersuchen. Bei den KI Verfahren handelt es sich zum Beispiel um Verfahren des maschinellen Lernens wie Naive Bayes, Support Vector Machines und Entscheidungsbäume.

Der zweite Schritt, die Berechnung der Ähnlichkeit der Konzepte der Profile, erfolgt nach der gleichen Systematik. Konzepte, in diesem Fall <ml:Customer> und <foaf:Person>, werden auf Kriterien wie Ähnlichkeit der Attribute, berechnet in Schritt 1, und die Ähnlichkeit der Konzept-Bezeichnungen hin untersucht. Die Ähnlichkeiten der Konzepte und AttributBezeichnungen können mittels Agenten, die externes Wissen wie z. B. WordNet o. a. linguistischer Datenbanken verwenden, verbessert werden. So können z. B. Datenbanken mit Namen von Personen oder Orten eines Kulturkreises dazu dienen, um beim Auffinden dieser Namen den in einem Profil damit assoziierten Attributbezeichner als Attributbezeichner für Personenbeziehungsweise Ortsnamen zu klassifizieren. Auf diese Weise werden Profile unterschiedlichen Formats durch Agenten mit definierten Aufgaben (im Bsp. "Suche nach Namensfeldern") in ihren Attributen analysiert.

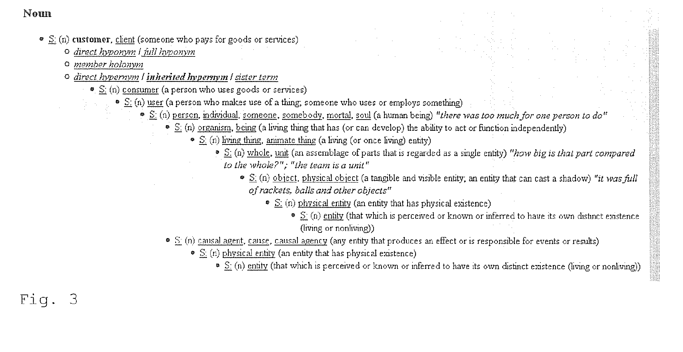

Im gegeben Beispiel mit den Ontologien der beiden Dienste, kann ein Agent mit Zugriff auf WordNet (Fig. 3) erkennen, dass der Begriff *Customer* aus der Ontologie von Dienst 2 ein Hyponym von *Person* aus der Ontologie von Dienst 1 ist und somit die beiden Konzepte eine starke Ähnlichkeit aufweisen. Die Berechnung des Grades der Ähnlichkeit wird anhand des Abstandes der Begriffe, also *Customer* ist ein Hyponym 3. Grades, durchgeführt.

Die Verwendung von Agenten für die Berechnungen in Schritt 1 und 2 erlaubt es dem System neue Verfahren zur Laufzeit hinzuzufügen und so die Berechnung zu verbessern. Es können auch Agenten, deren Verfahren sich als schlecht erwiesen haben, aus dem System entfernt werden. Die Qualität der eingesetzten Agenten kann dabei aus der Häufigkeit des Annehmens oder Ablehnens der vorgeschlagenen Verknüpfungen durch den Benutzer (Schritt 4) bestimmt werden (halbautomatisches System).

Als letzter Berechnungsschritt wird die Struktur des Profils mit in Betracht gezogen. Also Genre ist ein Unterkonzept von Künstler in Dienst 2 und ein Unterkonzept von Schauspieler in Dienst 1. Dazu werden die Graphen der beiden Profile miteinander verglichen. So sind die Konzepte Genre aus beiden Profilen in Schritt 2 zwar als ähnlich klassifiziert worden, da sie gleich benannt sind, sie sind aber verschiedenen Oberkonzepten zugeordnet, die in Schritt 2 als nicht ähnlich klassifiziert worden sind.

Das Ergebnis der Berechnungen ist ein Rating für die Wahrscheinlichkeit ob 2 Attribute oder Konzepte sich ähnlich sind. So werden die beiden Konzepte <ml:Customer> und <foaf:Person> einen hohen Ähnlichkeitswert aufweisen da:
- <foaf:name> und <ml:customer_name>: hier sind die Attributnamen ähnlich und der Inhalt der beiden Attribute gleich -> 85% Übereinstimmung
- <foaf:mbox> und <ml:mail>: hier ist der Inhalt gleich -> 60% Übereinstimmung
- WordNet Hyponym Übereinstimmung von Customer und Person -> 80% Übereinstimmung
- Konzepte sind auf der gleichen Ebene der Ontologie -> 100%

Die Prozentzahlen sind ein Rating des Agenten, das die berechnete Ähnlichkeit wiedergibt. Jeder Agent im Ensemble gibt ein solches Rating ab.

Die Ergebnisse der verschiedenen Berechnungsschritte werden dann aggregiert und es wird eine Empfehlung ausgesprochen, die entweder (automatisch) verwendet wird oder (halb-automatisch) von einem Benutzer (z. B. Admin einer Applikation) im letzten Schritt noch bestätigt werden kann um das Agenten-Ensemble weiter zu trainieren und zu verbessern.

Die Aggregation der Ergebnisse erfolgt mittels eines Social-Choice-Algorithmus, einer Condorcet-Variante: der Schulze-Methode. Die Schulze-Methode ist ein Wahlsystem und die derzeit am weitesten verbreitete Condorcet-Methode. Dazu werden die Ratings der Agenten in ein Ranking umgewandelt, das die Einschätzung der einzelnen Agenten zur Ähnlichkeit der Konzepte und Attribute widerspiegelt.

Im Folgenden wird ein kleines Beispiel gegeben bei dem

### 3 Agenten das Attribut <foaf:name> bewerten

Das Rating nach den verschiedenen Berechnungsschritten lautet:

| Agent 1 | Rating |
|---|---|
| <ml:customer_name> | 90% |
| <dai:genre> | 0% |
| <ml:mail> | 5% |

| Agent 2 | Rating |
|---|---|
| <ml:customer_name> | 90% |
| <dai:genre> | 5% |
| <ml:mail> | 0% |

| Agent 3 | Rating |
|---|---|
| <ml:customer_name> | 90% |
| <dai:genre> | 5% |
| <ml:mail> | 0% |

### Umgewandelt in Ranking:

| | | | |
|---|---|---|---|
| Agent 1 | <ml:customer_name> | <ml:mail> | <dai:genre> |
| Agent 2 | <ml:customer_name> | <dai:genre> | <ml:mail> |
| Agent 3 | <ml:customer_name> | <dai:genre> | <ml:mail> |

Damit gewinnt <ml:customer_name> die Wahl und wird vom Ensemble als ähnliches Attribut vorgeschlagen. Anzumerken ist, dass in der technischen Umsetzung ein Grenzwert verwendet wird, der Attribute oder Konzepte unter einem bestimmten Rating-Wert nicht zur Wahl zulässt. Detaillierte Informationen zur genauen Berechnung der Schulze-Methode sind unter http://m-schulze.webhop.net/schulze1.pdf zu finden.

Sollten neue Konzepte in einer einzubindenden Ontologie vorhanden sein, die in der Meta-Ontologie noch nicht vorhanden sind, dann werden diese entweder automatisch übernommen oder dem Benutzer ebenfalls vorgelegt (halb-automatisch) und er kann sie in die Meta-Ontologie mit übernehmen.

### Literaturliste

### Referenzen zum Ontologie Mapping

- Learning to Match Ontologies on the Semantic Web (2003) by Anhai Doan , Jayant Madhavan, Robin Dhamankar, Pedro Domingos, Aln Halevy
- Learning Source Descriptions for Data Integration by AnHai Doan, Pedro Domingos, Alon Levy
- Semantic Enrichment for Ontology Mapping by Xiaomeng Su
- Eine offene Architektur für die agentenbasierte, adaptive, personalisierte Informationsfilterung by Andreas Lommatzsch, Berlin, Techn. Univ., Diss., 2009
- A New Monotonic, Clone-Independent, Reversal Symmetric, and Condorcet-Consistent Single-Winner Election Method (draft, 21 August 2009) Markus SchulzeMarkus.Schulze@Alumni.TU-Berlin.de, http://m-schulze.webhop.net/schulze1.pdf

## Patentansprüche

1. Ein Profil-Abbildungssystem, das mindestens zwei disjunkte Profile miteinander verknüpft, die zur Parametrisierung einer Computer gesteuerten Anwendungen als digitale Daten auf Speichern hinterlegt sind, wobei die Profile Attributbezeichnungen und Attributwerte aufweisen, unter Verwendung:
- eines weiteren Speichers auf dem eine Datenstruktur abgelegt ist, und die eine Meta-Ontologie bereitstellt;
- einem Zugriffsmodul, das den Zugriff auf die disjunkten Profile auf den Speichern ermöglicht
- einer Bearbeitungseinheit, die die zwei disjunkten Profile auf die Meta-Ontologie abbildet, indem die Attributbezeichnungen und die Attributwerte mit der Meta-Ontologie verknüpft werden;
- ein Bereitstellungsmodul, das einen Zugriff auf die Meta-Ontologie über ein Netzwerk ermöglicht, um einer Anwendung die Attributwerte für Attributbezeichnungen bereitzustellen, damit die Anwendung parametrisierbar ist.

2. Das Profil-Abbildungssystem nach dem vorhergehenden Anspruch, wobei die Bearbeitungseinheit die Verknüpfung der Profile auf der Basis von einem oder mehreren der folgenden Ansätze durchführt, deren einzelne Ergebnisse miteinander verbunden werden können:
- Bestimmung der Ähnlichkeit der Attributbezeichnungen und Attributwerte;
- Bestimmung der Ähnlichkeit der Konzept-Bezeichnung und deren Attribute;
- Bestimmung der Ähnlichkeit der Struktur der Profile.

3. Das Profil-Abbildungssystem nach dem vorhergehenden Anspruch, wobei die Bearbeitungseinheit ein Ensemble von Agenten einsetzt, das sowohl verschiedene Verfahren der künstlichen Intelligenz verwendet und/oder kombiniert, um die Ähnlichkeiten der Attribute zu berechnen,
und/oder Verfahren wie Pearson Korrelation und Jaccard Index um die Inhalte der Attribute auf Ähnlichkeit zu untersuchen.

4. Das Profil-Abbildungssystem nach dem vorhergehenden Anspruch, wobei die Verfahren der künstlichen Intelligenz Verfahren des maschinellen Lernens wie Naive Bayes, Support Vector Machines und Entscheidungsbäume sind.

5. Das Profil-Abbildungssystem nach dem vorhergehenden Anspruch, wobei die Bearbeitungseinheit eingerichtet ist, um KI-Verfahren während der Laufzeit Hinzuzufügen oder zu Entfernen.

6. Das Profil-Abbildungssystem nach einem oder mehreren der vorhergehenden Ansprüche, wobei die Bearbeitungseinheit eine Verknüpfung mit der Meta-Ontologie auf der Basis der Beziehung PartOf, und/oder eine Beziehung der Ähnlichkeit, similarTo, mit einem Prozentwert der Ähnlichkeit durchführt und diese auf dem Speichersystem ablegt.

7. Das Profil-Abbildungssystem nach einem oder mehreren der vorhergehenden Ansprüche, wobei die Bestimmung der Ähnlichkeit der Konzept-Bezeichnung durch die Bearbeitungseinheit durch Berechnung der Ähnlichkeit der Attributbezeichnungen erfolgt wobei zusätzliches externes Wissen wie WordNet oder andere linguistischer Datenbanken verwendet wird.

8. Das Profil-Abbildungssystem nach einem oder mehreren der vorhergehenden Ansprüche, wobei die Bearbeitungseinheit die Ergebnisse der verschiedenen Berechnungsschritte aggregiert und es wird eine Empfehlung ausgesprochen, die entweder automatisch verwendet wird oder halb-automatisch von einem Benutzer im letzten Schritt noch bestätigt werden kann, um das Agenten-Ensemble weiter zu trainieren und zu verbessern, wobei vorzugsweise die Aggregation der Ergebnisse durch die Bearbeitungseinheit mittels eines Social-Choice-Algorithmus, einer Condorcet-Variante, insbesondere der Schulze-Methode, erfolgt.

9. Ein Profil-Abbildungsverfahren, das mindestens zwei disjunkte Profile miteinander verknüpft, die zur Parametrisierung einer Computer gesteuerten Anwendungen als digitale Daten auf Speichern hinterlegt sind, wobei die Profile Attributbezeichnungen und Attributwerte aufweisen, umfassend die Schritte Verwendung:
- Bereitstellen einer Datenstruktur auf einem weiteren Speicher die eine Meta-Ontologie repräsentiert;
- Zugreifen auf die disjunkten Profile auf den Speicher durch eine Bearbeitungseinheit;
- Abbilden der zwei disjunkten Profile auf die Meta-Ontologie durch die Bearbeitungseinheit, indem die Attributbezeichnungen und die Attributwerte mit der Meta-Ontologie verknüpft werden;
- Bereitstellen der Meta-Ontologie über ein Netzwerk, um den Zugriff auf die Meta-Ontologie durch Anwendungen zu ermöglichent, um diesen die Attributwerte für vorgegebenen Attributbezeichnungen bereitzustellen, damit die Anwendung parametrisiert wird.

10. Das Profil-Abbildungsverfahren nach dem vorhergehenden Anspruch, wobei die Bearbeitungseinheit die Verknüpfung der Profile auf der Basis von einem oder mehreren der folgenden Ansätze durchführt, deren einzelne Ergebnisse miteinander verbunden werden können:
- Bestimmung der Ähnlichkeit der Attributbezeichnungen und Attributwerte;
- Bestimmung der Ähnlichkeit der Konzept-Bezeichnung und deren Attribute;
- Bestimmung der Ähnlichkeit der Struktur der Profile.

11. Das Profil-Abbildungsverfahren nach dem vorhergehenden Anspruch, wobei durch die Bearbeitungseinheit ein Ensemble von Agenten eingesetzt wird, das sowohl verschiedene Verfahren der künstlichen Intelligenz verwendet und/oder kombiniert, um die Ähnlichkeiten der Attribute zu berechnen,
und/oder Verfahren wie Pearson Korrelation und Jaccard Index, um die Inhalte der Attribute auf Ähnlichkeit zu untersuchen.

12. Das Profil-Abbildungsverfahren nach dem vorhergehenden Anspruch, wobei die Verfahren der künstlichen Intelligenz Verfahren des maschinellen Lernens wie Naive Bayes, Support Vector Machines und Entscheidungsbäume sind.

13. Das Profil-Abbildungsverfahren nach dem vorhergehenden Anspruch, wobei die Bearbeitungseinheit eingerichtet ist, um KI-Verfahren während der Laufzeit Hinzuzufügen oder zu Entfernen.

14. Das Profil-Abbildungsverfahren nach einem oder mehreren der vorhergehenden Verfahrensansprüche, wobei die Bearbeitungseinheit eine Verknüpfung mit der Meta-Ontologie auf der Basis der Beziehung PartOf, und/oder eine Beziehung der Ähnlichkeit, similarTo, mit einem Prozentwert der Ähnlichkeit durchführt und diese auf dem Speichersystem ablegt.

15. Das Profil-Abbildungsverfahren nach einem oder mehreren der vorhergehenden Verfahrensansprüche, wobei die Bestimmung der Ähnlichkeit der Konzept-Bezeichnung durch die Bearbeitungseinheit durch Berechnung der Ähnlichkeit der Attributbezeichnungen erfolgt wobei zusätzliches externes Wissen wie WordNet oder andere linguistischer Datenbanken verwendet wird.

16. Das Profil-Abbildungsverfahren nach einem oder mehreren der vorhergehenden Verfahrensansprüche, wobei die Bearbeitungseinheit die Ergebnisse der verschiedenen Berechnungsschritte aggregiert und es wird eine Empfehlung ausgesprochen, die entweder automatisch verwendet wird oder halb-automatisch von einem Benutzer im letzten Schritt noch bestätigt werden kann, um das Agenten-Ensemble weiter zu trainieren und zu verbessern, wobei insbesondere die Aggregation der Ergebnisse durch die Bearbeitungseinheit mittels eines Social-Choice-Algorithmus, einer Condorcet-Variante, insbesondere der Schulze-Methode, erfolgt.
